# EUROPÄISCHE PATENTSCHRIFT

(11) **EP 1 331 117 B1**
(45) Veröffentlichungstag und Bekanntmachung des Hinweises auf die Patenterteilung: **02.11.2005**
(21) Anmeldenummer: 03000827.0
(22) Anmeldetag: 15.01.2003
(51) Int. Cl.: B60H 1/34

(54) **Luftdüse zur Belüftung eines Innenraums eines Kraftfahrzeuges**
Air nozzle for ventilating the interior of a motor vehicle
Buse d'air pour l'aération de l'habitacle d'un véhicule automobile

(30) Priorität: 25.01.2002 DE 10202925
(43) Veröffentlichungstag der Anmeldung: 30.07.2003
(73) Patentinhaber: ADAM OPEL AG, 65423 Rüsselsheim (DE)
(72) Erfinder: Finkbeiner, Beat, 65191 Wiesbaden (DE)

(56) Entgegenhaltungen:
- WO-A-01/32453
- DE-A- 19 733 319
- US-A- 4 905 580

## Beschreibung

Die Erfindung betrifft eine Luftdüse zur Belüftung eines Innenraums eines Kraftfahrzeuges mit mehreren, in einem Düsengehäuse angeordneten Lamellen und mit einer Verstelleinrichtung zur Verstellung der Ausströmrichtung innerhalb einer Ausströmebene.

Eine solche Luftdüse ist beispielsweise aus der EP 0 397 909 B1 bekannt. Hierbei sind die Lamellen um eine quer zur Strömungsrichtung weisende Schwenkachse schwenkbar gelagert und mit einem Stellelement der Verstelleinrichtung verbunden. Bei der vertikalen Anordnung der Schwenkachse ermöglichen die Lamellen eine Führung des aus der Luftdüse austretenden Luftstroms in einer horizontalen Ebene.

Dokument US 4 905 580 offenbart eine Laftdüse gemäß des ersten Teils des Anspruchs eins.

Nachteilig bei der bekannten Luftdüse ist, dass die Lamellen für ihre Schwenkbarkeit einen großen Platzbedarf haben. Eine starke Änderung des Ausströmwinkels durch entsprechend geschwenkte Lamellen führt zudem zu einer Drosselung des aus der Luftdüse austretenden Luftstroms.

Der Erfindung liegt das Problem zugrunde, eine Luftdüse der eingangs genannten Art so zu gestalten, dass sie einen besonders geringen Platzbedarf hat und dass eine Drosselung des Luftstroms weitgehend vermieden wird.

Dieses Problem wird erfindungsgemäß dadurch gelöst, dass die Lamellen jeweils zumindest eine Strömungs-Leitschaufel aufweisen, dass einige der Leitschaufeln in die eine Richtung der vorgesehenen Ausströmebene und die anderen Leitschaufeln in die andere Richtung der vorgesehenen Ausströmebene ausgerichtet sind und dass die Strömungs-Leitschaufeln in eine hervorstehende und/oder zurückgezogene Position bewegbar sind.

Durch diese Gestaltung wird der Ausströmwinkel der Luft aus der erfindungsgemäßen Luftdüse von den weiter hervorstehenden Leitschaufeln bestimmt. Damit kann der Ausströmwinkel der Luft durch die Verschiebung der Leitschaufeln längs der Strömungsrichtung eingestellt werden. Eine Veränderung des wirksamen Strömungsquerschnitts der erfindungsgemäßen Luftdüse und damit eine Drosselung des Luftstroms bei einem besonders großen Ausströmwinkel wird dank der Erfindung vermieden. Weiterhin erfordert eine Verschiebbarkeit der Leitschaufeln einen besonders geringen Platzbedarf. Ein weiterer Vorteil dieser Gestaltung besteht darin, dass sich die Lamellen der vorgesehenen Kontur einer an die erfindungsgemäße Luftdüse angrenzenden Armaturentafel des Kraftfahrzeuges anpassen lassen. Eine störende Veränderung der Ansicht der erfindungsgemäßen Luftdüse beim Verstellen der Leitschaufeln wird daher verhindert. Zudem können die Lamellen entlang ihrer längsten Erstreckung in Strömungsrichtung gekrümmt sein.

Die Strömungs-Leitschaufeln könnten beispielsweise auf den Lamellen verschieblich geführt sein. Die erfindungsgemäße Luftdüse erfordert jedoch besonders wenige zu montierende Bauteile, wenn die Lamellen einstückig mit den Strömungs-Leitschaufeln gefertigt sind.

Streuverluste bei der Einstellung des Ausströmwinkels lassen sich gemäß einer anderen vorteilhaften Weiterbildung der Erfindung einfach vermeiden, wenn die Strömungs-Leitschaufeln einander benachbarter Lamellen aufeinander zuweisend angeordnet sind. Durch diese Gestaltung lenkt zunächst die zurückstehende Strömungs-Leitschaufel den Luftstrom auf die hervorstehende, zu der zurückstehenden Strömungs-Leitschaufel entgegengesetzt ausgerichtete Strömungs-Leitschaufel. Daher ist der Ausströmwinkel bereits bei einer sehr geringen Relativverschiebung der Strömungsleitschaufeln besonders groß.

Bei den geschwenkten Lamellen der bekannten Luftdüse kann zwischen der Wandung des Düsengehäuses und der Äußersten der Lamellen Luft auf geradem Wege vorbeiströmen. Verluste bei der Umlenkung des Luftstroms lassen sich gemäß einer anderen vorteilhaften Weiterbildung der Erfindung zuverlässig vermeiden, wenn die Äußersten der Lamellen an einer Innenwandung des Düsengehäuses anliegen. Vorzugsweise weisen dabei die Strömungs-Leitschaufeln der Äußersten der Lamellen zu den übrigen Lamellen.

Die Bewegungen der Strömungs-Leitschaufeln könnten gekoppelt sein, so dass bei einer Bedienung der Verstelleinrichtung die einen Strömungs-Leitschaufeln gegen die Strömungsrichtung der Luft zurückgezogen werden, während die anderen in Strömungsrichtung vorgeschoben werden. Stellkräfte bei der Einstellung des Ausströmwinkels lassen sich gemäß einer anderen vorteilhaften Weiterbildung der Erfindung besonders gering halten, wenn die Lamellen einen zurückgezogenen Anschlag und einen hervorstehenden Anschlag aufweisen und wenn die Verstelleinrichtung zur wahlweisen Bewegung der in der einen Richtung oder der in der anderen Richtung weisenden Strömungs-Leitschaufeln gestaltet ist. Durch diese Gestaltung müssen bei der Einstellung des Ausströmwinkels nur die Hälfte der Strömungsleitschaufeln bewegt werden.

Die Leitschaufeln lassen sich gemäß einer anderen vorteilhaften Weiterbildung der Erfindung besonders kostengünstig fertigen, wenn die Lamellen einen in Strömungsrichtung weisenden geraden Abschnitt und einen dazu abgewinkelten Abschnitt aufweisen. Hierdurch wird die Leitschaufel durch den abgewinkelten Abschnitt erzeugt.

Der Ausströmwinkel der Luft lässt sich gemäß einer anderen vorteilhaften Weiterbildung der Erfindung wahlweise in horizontaler und vertikaler Richtung verstellen, wenn die die Leitschaufeln aufweisenden Lamellen in Strömungsrichtung gesehen hinter rechtwinklig zu ihnen angeordneten Lamellen angeordnet sind.

Eine Sperrung der Strömung durch die erfindungsgemäße Luftdüse erfordert einen besonders geringen baulichen Aufwand, wenn die in Strömungsrichtung vor den die Leitschaufeln aufweisenden Lamellen angeordneten Lamellen in eine den Strömungsquerschnitt des Düsengehäuses sperrende Stellung verschwenkbar sind.

Die Verstelleinrichtung könnte beispielsweise ein Schiebeelement oder Zug- und Druckelemente zur Verstellung der Strömungsleitschaufeln aufweisen. Die Verstelleinrichtung der erfindungsgemäßen Luftdüse ermöglicht jedoch eine besonders komfortable Bedienung, wenn die Verstelleinrichtung ein Koppelglied zur Übertragung der Drehbewegung eines Stellrades auf die Längsbewegung der Strömungs-Leitschaufeln hat.

Zur Verringerung des baulichen Aufwandes der Verstelleinrichtung trägt es gemäß einer anderen vorteilhaften Weiterbildung der Erfindung bei, wenn die Verstelleinrichtung eine Kulissenführung,für die Strömungs-Leitschaufeln aufweist.

Die erfindungsgemäße Luftdüse gestaltet sich konstruktiv besonders einfach, wenn das Düsengehäuse rohrförmig mit einer Öffnung im Mantel gestaltet ist und wenn die die Strömungs-Leitschaufeln aufweisenden Lamellen in der Öffnung und die anderen Lamellen innerhalb des rohrförmigen Bereichs angeordnet sind.

Die Erfindung lässt verschiedene Ausführungsformen zu. Zur weiteren Verdeutlichung ihres Grundprinzips sind zwei davon in der Zeichnung dargestellt und werden nachfolgend beschrieben. Die Zeichnung zeigt in
- Fig. 1: eine Armaturentafel eines Kraftfahrzeuges mit einer erfindungsgemäßen Luftdüse,
- Fig. 2: eine Schnittdarstellung durch die Luftdüse aus Figur 1 entlang der Linie II - II,
- Fig. 3: die Luftdüse aus Figur 2 mit verschobenen Strömungs-Leitschaufeln,
- Fig. 4: eine schematische Darstellung einer Verstelleinrichtung der Strömungs-Leitschaufeln aus Figur 2
- Fig. 5: eine Schnittdarstellung durch eine Luftdüse mit vier Lamellen,
- Fig. 6: eine Schnittdarstellung durch eine Luftdüse mit verschiebbaren Strömungs-Leitschaufeln.

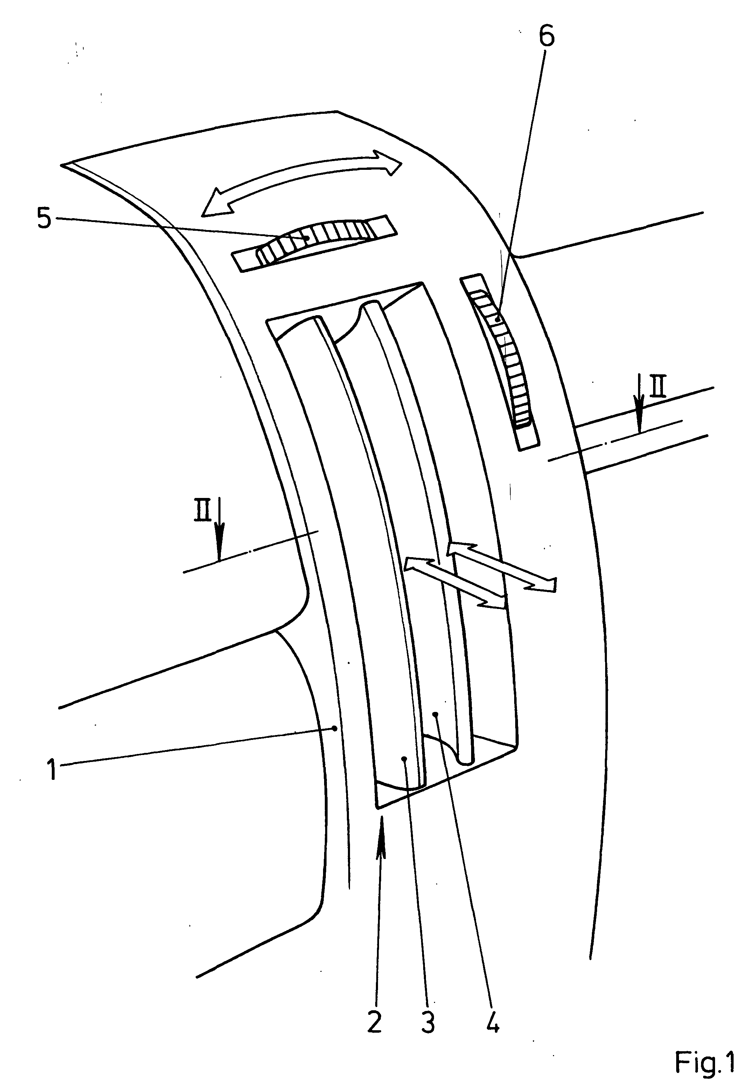

Figur 1 zeigt in einer perspektivischen Darstellung eine in einer Armaturentafel 1 angeordnete Luftdüse 2. Die Luftdüse 2 weist beispielhaft zwei Lamellen 3, 4 und zwei Stellräder 5, 6 zur Einstellung des Ausströmwinkels der aus der Luftdüse 2 ausströmenden Luft auf. Mit dem einen Stellrad 5 lässt sich der Ausströmwinkel in der horizontalen Ausströmebene verstellen, während mit dem anderen Stellrad 6 der Ausströmwinkel in der vertikalen Ausströmebene verstellt wird.

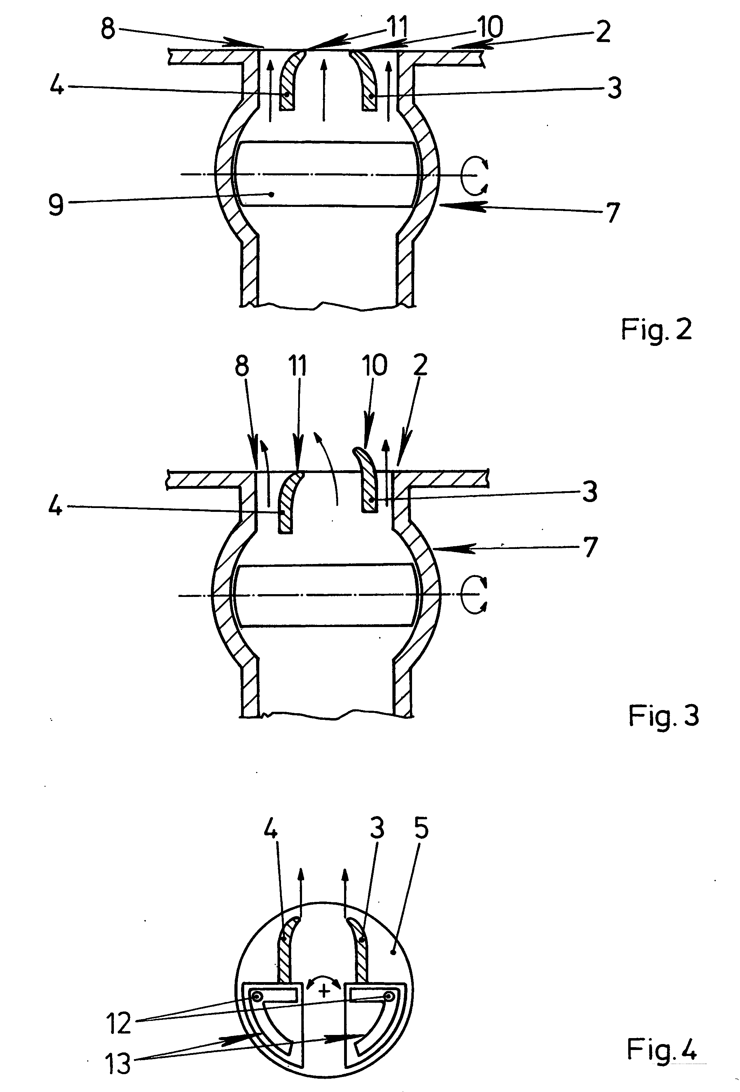

Figur 2 zeigt in einer Schnittdarstellung durch die Luftdüse 2 aus Figur 1 entlang der Linie II - II, dass die Luftdüse 2 ein rohrförmiges Düsengehäuse 7 hat und dass die Lamellen 3, 4 aus Figur 1 in einer Öffnung 8 des Mantels des Düsengehäuses 7 angeordnet sind. In dem rohrförmigen Düsengehäuse 7 sind zudem schwenkbare Lamellen 9 zur Einstellung des Ausströmwinkels in der vertikalen Ausströmebene angeordnet. Diese Lamellen 9 lassen sich von dem in Figur 1 dargestellten Stellrad 6 verschwenken. Die in der Öffnung angeordneten Lamellen 3, 4 sind einstückig mit Strömungs-Leitschaufeln 10, 11 gefertigt und lassen sich senkrecht zur Ebene der Öffnung 8 verschieben. Die Strömungs-Leitschaufeln 10, 11 der beiden Lamellen sind aufeinander zuweisend angeordnet. Mittels des einen in Figur 1 dargestellten Stellrades 5 lässt sich wahlweise die eine Lamelle 3 oder die andere Lamelle 4 geringfügig aus dem Düsengehäuse 7 herausschieben. In der dargestellten Stellung weisen die Strömungs-Leitschaufeln 10, 11 aufeinander zu, so dass ein aus dem Düsengehäuse 7 austretender Luftstrom nicht ausgelenkt wird. Zur Verdeutlichung sind Strömungen von Luft in der Zeichnung mit Pfeilen gekennzeichnet.

Figur 3 zeigt die Luftdüse 2 aus Figur 2 nach einer Verschiebung einer der Lamellen 3 aus der Öffnung heraus. Die andere Lamelle 4 befindet sich in der in Figur 2 beschriebenen Position. Die aus dem Düsengehäuse 7 ausströmende Luft wird von der Strömumgs-Leitschaufel 10 der weiter herausragenden Lamelle 3 abgelenkt.

Figur 4 zeigt schematisch eine mögliche Verstelleinrichtung für die die Strömungs-Leitschaufeln 10, 11 aufweisenden Lamellen 3, 4 aus den Figuren 1 bis 3. Das Stellrad 5 weist zwei Zapfen 12 auf, mit denen es in Kulissenführungen 13 der Lamellen 3, 4 eindringt. Bei der Drehung des Stellrades 5, beispielsweise im Uhrzeigersinn, wird die eine Lamelle 4 mitbewegt, während die andere Lamelle 3 in ihrer eingezeichneten Position verbleibt.

In einer alternativen, nicht dargestellten Ausführungsform können die Lamellen 3, 4 auch miteinander gekoppelt werden, so dass bei einer Drehung des Stellrades 5 und der damit verbundenen Herausbewegung der einen Lamelle 3 aus der in Figur 2 dargestellten Öffnung 8 die andere Lamelle 4 in das Düsengehäuse 7 hineinbewegt wird.

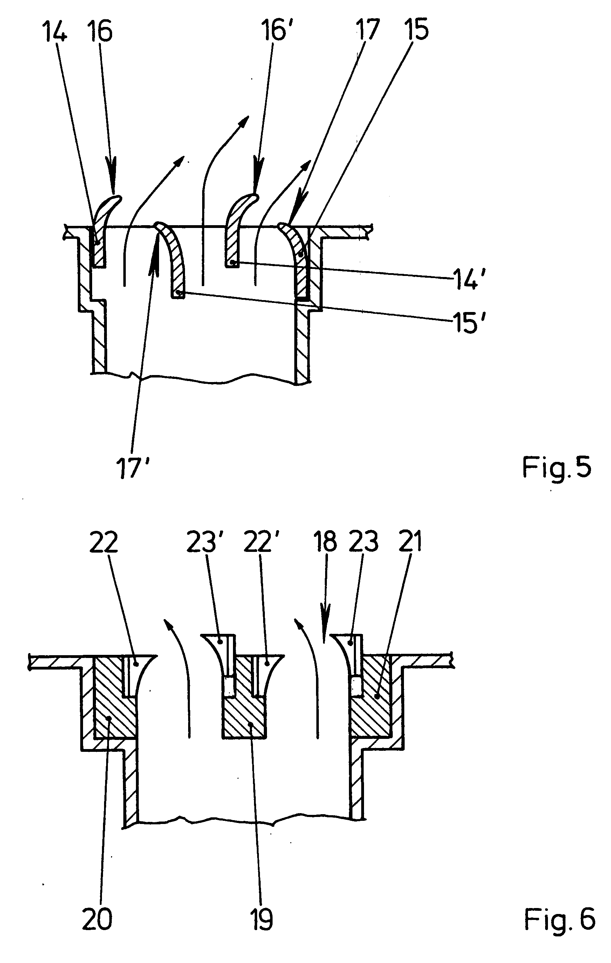

Figur 5 zeigt eine Schnittdarstellung durch eine weitere Ausführungsform der Luftdüse, bei der vier Lamellen 14, 14', 15, 15' verschiebbar angeordnet sind. Jede der Lamellen 14, 14', 15, 15' ist einstückig mit einer Strömungs-Leitschaufel 16, 16', 17, 17' gefertigt. Die Äußersten der Lamellen 16, 17 sind an der seitlichen Wandung der Luftdüse angeordnet. Die Strömungs-Leitschaufeln 16, 16', 17, 17' sind jeweils paarweise aufeinander zuweisend angeordnet. Beispielhaft sind zwei der Lamellen 14, 14' mit gleichsinnigen Strömungs-Leitschaufeln 16, 16' in einer hervorstehenden Stellung dargestellt sowie die Strömung der Luft mit Pfeilen gekennzeichnet. Hierbei ist zu erkennen, dass die Ausströmrichtung der Luft durch die Strömungs-Leitschaufeln 16, 16' der hervorstehenden Lamellen 14, 14' festgelegt wird.

Figur 6 zeigt eine Schnittdarstellung durch eine weitere Ausführungsform der Luftdüse mit einer zentralen, in einer Öffnung 18 angeordneten Lamelle 19. Die Lamelle 19 und der Lamelle 19 gegenüberstehende Seitenwände 20, 21 der Öffnung 18 weisen jeweils Strömungs-Leitschaufeln 22, 22', 23, 23' auf. Die Strömungs-Leitschaufeln 22, 22', 23, 23' sind längsverschieblich in der Lamelle 19 und den Seitenwänden 20, 21 geführt und aufeinander zuweisend angeordnet. Beispielhaft ist in Figur 6 eine Verschiebung zweier in die eine Richtung weisenden Strömungs-Leitschaufeln 23, 23' aus der Öffnung 18 heraus in eine hervorstehende Position sowie Strömungen der aus der Luftdüse austretenden Luft dargestellt. Hierbei ist zu erkennen, dass die Strömung der Luft in mehrere Teilströme aufgeteilt und von den weiter hervorstehenden Strömungsleitschaufeln 23, 23' abgelenkt ist.

### Bezugszeichenliste

- 1: Armaturentafel
- 2: Luftdüse
- 3, 4: Lamelle
- 5, 6: Stellrad
- 7: Düsengehäuse
- 8: Öffnung
- 9: Lamelle
- 10, 11: Strömungs-Leitschaufel
- 12: Zapfen
- 13: Kulissenführung
- 14, 15: Lamelle
- 16, 17: Strömungs-Leitschaufel
- 18: Öffnung
- 19: Lamelle
- 20, 21: Seitenwand
- 22, 23: Strömungs-Leitschaufel

## Patentansprüche

1. Luftdüse (2) zur Belüftung eines Innenraums eines Kraftfahrzeuges mit mehreren, in einem Düsengehäuse angeordneten Lamellen (3, 4) und mit einer Verstelleinrichtung zur Verstellung der Ausströmrichtung innerhalb einer Ausströmebene, wobei die Lamellen (3, 4, 14, 15, 19) jeweils zumindest eine Strömungs-Leitschaufel (10, 11, 16, 17, 22, 23) aufweisen, **dadurch gekennzeichnet, dass** einige der Leitschaufeln (10, 11, 16, 17, 22, 23) in eine Richtung der vorgesehenen Ausströmebene und die anderen Leitschaufeln (10, 11, 16, 17, 22, 23) in eine zweite, der ersten Richtung entgegengesetzten Richtung der vorgesehenen Ausströmebene ausgerichtet sind und dass die Strömungs-Leitschaufeln (10, 11, 16, 17, 22, 23) in eine hervorstehende und/oder zurückgezogene Position bewegbar sind.

2. Luftdüse nach Anspruch 1, **dadurch gekennzeichnet, dass** die Lamellen (3, 4, 14, 15) einstückig mit den Strömungsleitschaufeln (10, 11, 16, 17) gefertigt sind.

3. Luftdüse nach Anspruch 1 oder 2, **dadurch gekennzeichnet, dass** die Strömungs-Leitschaufeln (10, 11, 16, 17) einander benachbarter Lamellen (3, 4, 14, 15) aufeinander zuweisend angeordnet sind.

4. Luftdüse nach zumindest einem der vorhergehenden Ansprüche, **dadurch gekennzeichnet, dass** die Äußersten der Lamellen (14, 15) an einer Innenwandung des Düsengehäuses anliegen.

5. Luftdüse nach zumindest einem der vorhergehenden Ansprüche, **dadurch gekennzeichnet, dass** die Lamellen (3, 4, 14, 15, 19) einen zurückgezogenen Anschlag und einen hervorstehenden Anschlag aufweisen und dass die Verstelleinrichtung zur wahlweisen Bewegung der in der einen Richtung oder der in der anderen Richtung weisenden Strömungs-Leitschaufeln (10, 11, 16, 17, 22, 23) gestaltet ist.

6. Luftdüse nach zumindest einem der vorhergehenden Ansprüche, **dadurch gekennzeichnet, dass** die Lamellen (3, 4, 14, 15) einen in Strömungsrichtung weisenden geraden Abschnitt und einen dazu geringfügig abgewinkelten Abschnitt aufweisen.

7. Luftdüse nach zumindest einem der vorhergehenden Ansprüche, **dadurch gekennzeichnet, dass** die die Leitschaufeln (10, 11) aufweisenden Lamellen (3, 4) im Wesentlichen vertikal und in Strömungsrichtung gesehen hinter horizontal angeordneten Lamellen (9) angeordnet sind.

8. Luftdüse nach zumindest einem der vorhergehenden Ansprüche, **dadurch gekennzeichnet, dass** die in Strömungsrichtung vor den die Leitschaufeln (10, 11) aufweisenden Lamellen (3, 4) angeordneten Lamellen (9) in eine den Strömungsquerschnitt des Düsengehäuses (7) sperrende Stellung verschwenkbar sind.

9. Luftdüse nach zumindest einem der vorhergehenden Ansprüche, **dadurch gekennzeichnet, dass** die Verstelleinrichtung ein Koppelglied zur Übertragung der Drehbewegung eines Stellrades (5) auf die Längsbewegung der Strömungs-Leitschaufeln (10, 11) hat.

10. Luftdüse nach zumindest einem der vorhergehenden Ansprüche, **dadurch gekennzeichnet, dass** die Verstelleinrichtung eine Kulissenführung (13) für die Strömungs-Leitschaufeln (10, 11) aufweist.

11. Luftdüse nach zumindest einem der vorhergehenden Ansprüche, **dadurch gekennzeichnet, dass** das Düsengehäuse (7) rohrförmig mit einer Öffnung (8) im Mantel gestaltet ist und dass die die Strömungs-Leitschaufeln (10, 11) aufweisenden Lamellen (3, 4) in der Öffnung (8) und die anderen Lamellen (9) innerhalb des rohrförmigen Bereichs angeordnet sind.

## Claims

1. Air nozzle (2) for ventilating an interior of a motor vehicle, with a plurality of fins (3, 4), which are disposed in a nozzle housing, and with an adjusting device for adjusting the exit direction within an exit plane, wherein the fins (3, 4, 14, 15, 19) in each case comprise at least one flow guide vane (10, 11, 16, 17, 22, 23), **characterised in that** some of the guide vanes (10, 11, 16, 17, 22, 23) are oriented in one direction of the specified exit plane and the other guide vanes (10, 11, 16, 17, 22, 23) are oriented in a second direction, opposite to the first direction, of the specified exit plane, and that the flow guide vanes (10, 11, 16, 17, 22, 23) can be moved into a projecting and/or retracted position.

2. Air nozzle according to Claim 1, **characterised in that** the fins (3, 4, 14, 15) are manufactured integrally with the flow guide vanes (10, 11, 16, 17).

3. Air nozzle according to Claim 1 or 2, **characterised in that** the flow guide vanes (10, 11, 16, 17) of adjacent fins (3, 4, 14, 15) are disposed so as to be directed towards one another.

4. Air nozzle according to at least one of the preceding Claims, **characterised in that** the outermost of the fins (14, 15) lie against an inner wall of the nozzle housing.

5. Air nozzle according to at least one of the preceding Claims, **characterised in that** the fins (3, 4, 14, 15, 19) comprise one retracted stop and one protruding stop, and that the adjusting device is configured so as to selectively move the flow guide vanes (10, 11, 16, 17, 22, 23) pointing in one direction or those pointing in the other direction.

6. Air nozzle according to at least one of the preceding Claims, **characterised in that** the fins (3, 4, 14, 15) comprise a straight portion pointing in the flow direction and a portion bent slightly at an angle thereto.

7. Air nozzle according to at least one of the preceding Claims, **characterised in that** the fins (3, 4) comprising the guide vanes (10, 11) are disposed substantially vertically and, viewed in the flow direction, after horizontally disposed fins (9).

8. Air nozzle according to at least one of the preceding Claims, **characterised in that** the fins (9) disposed before the fins (3, 4) comprising the guide vanes (10, 11), viewed in the flow direction, can be pivoted into a position which blocks the flow cross section of the nozzle housing (7).

9. Air nozzle according to at least one of the preceding Claims, **characterised in that** the adjusting device has a coupling member to transmit the rotational movement of an actuating wheel (5) to the longitudinal movement of the flow guide vanes (10, 11).

10. Air nozzle according to at least one of the preceding Claims, **characterised in that** the adjusting device comprises a slotted guide (13) for the flow guide vanes (10, 11).

11. Air nozzle according to at least one of the preceding Claims, **characterised in that** the nozzle housing (7) is formed in a tubular manner with an opening (8) in the outer covering, and that the fins (3, 4) comprising the flow guide vanes (10, 11) are disposed in the opening (8) and the other fins (9) are disposed within the tubular region.

## Revendications

1. Buse d'air (2) pour l'aération de l'habitacle d'un véhicule automobile, comportant plusieurs lamelles (34) agencées dans un boîtier des buses et comportant un dispositif de réglage pour régler la direction de diffusion de l'écoulement à l'intérieur d'un plan de diffusion d'air, les lamelles (3, 4, 14, 15, 19) comportant chacune au moins une ailette de guidage du flux ou de l'écoulement (10, 11, 16, 17, 22, 23), **caractérisée en ce que** quelques-unes des ailettes de guidage (10, 11, 16, 17, 22, 23) sont orientées dans une direction du plan de diffusion d'air prévu et les autres ailettes de guidage (10, 11, 16, 17, 22, 23) sont orientés dans une deuxième direction du plan de diffusion d'air prévu, opposée à la première direction, et **en ce que** les ailettes de guidage du flux (10, 11, 16, 17, 22, 23) sont mobiles dans une position en saillie et/ou en retrait.

2. Buse d'air selon la revendication 1, **caractérisée en ce que** les lamelles (3, 4, 14, 15) sont réalisées d'un seul tenant avec les ailettes de guidage du flux (10, 11, 16, 17).

3. Buse d'air selon la revendication 1 ou 2, **caractérisée en ce que** les ailettes de guidage du flux (10, 11, 16, 17) de lamelles (3, 4, 14, 15) voisines sont agencées en étant orientées les unes vers les autres.

4. Buse d'air selon au moins l'une des revendications précédentes, **caractérisée en ce que** les lamelles (14, 15) les plus extérieures sont en appui contre une paroi intérieure du boîtier des buses.

5. Buse d'air selon au moins l'une des revendications précédentes, **caractérisée en ce que** les lamelles (3, 4, 14, 15, 19) comportent une butée en retrait et une butée en saillie et **en ce que** le dispositif de réglage est conçu pour déplacer au choix les ailettes de guidage du flux (10, 11, 16, 17, 22, 23) orientées dans l'une des directions ou celles orientées dans l'autre direction.

6. Buse d'air selon au moins l'une des revendications précédentes, **caractérisée en ce que** les lamelles (3, 4, 14, 15) comportent un tronçon rectiligne orienté dans la direction du flux et un tronçon faiblement coudé par rapport à celui-ci.

7. Buse d'air selon au moins l'une des revendications précédentes, **caractérisée en ce que** les lamelles (3, 4) munies des ailettes de guidage (10, 11) sont agencées sensiblement verticalement et, en référence à la direction d'écoulement, sont disposées en aval de lamelles (9) agencées horizontalement.

8. Buse d'air selon au moins l'une des revendications précédentes, **caractérisée en ce que** les lamelles (9), qui sont agencées, en référence à la direction d'écoulement, en amont des lamelles (3, 4) munies des ailettes de guidage (10, 11), sont aptes à pivoter dans une position obturant la section d'écoulement du boîtier des buses (7).

9. Buse d'air selon au moins l'une des revendications précédentes, **caractérisée en ce que** le dispositif de réglage comporte un organe de couplage destiné à transmettre le mouvement de rotation d'une molette de réglage (5) au déplacement longitudinal des ailettes de guidage du flux (10, 11).

10. Buse d'air selon au moins l'une des revendications précédentes, **caractérisée en ce que** le dispositif de réglage comporte un guidage à coulisse (13) pour les ailettes de guidage du flux (10, 11).

11. Buse d'air selon au moins l'une des revendications précédentes, **caractérisée en ce que** le boîtier des buses (7) est conçu en forme tubulaire avec un orifice (8) dans la paroi latérale et **en ce que** les lamelles (3, 4) munies des ailettes de guidage du flux (10, 11) sont agencées dans l'orifice (8) et les autres lamelles (9) sont agencées à l'intérieur de la zone tubulaire.
